# EUROPEAN PATENT SPECIFICATION

(11) **EP 1 053 374 B1**
(45) Date of publication and mention of the grant of the patent: **10.08.2005**
(21) Application number: 99906620.2
(22) Date of filing: 01.02.1999
(51) Int. Cl.: E04F 15/04

(54) **Flooring system comprising floorboards with guiding means**
Fussbodensystem umfassend Fussbodenplatten mit Führungsmitteln
Système de plancher comprenant des planches pourvues de moyens de guidage

(30) Priority: 04.02.1998 SE 9800311
(43) Date of publication of application: 22.11.2000
(73) Proprietor: Pergo (Europe) AB, 231 25 Trelleborg (SE)
(72) Inventor: OLOFSSON, Ola, S-231 66 Trelleborg (SE)
(74) Representative: HOFFMANN - EITLE
(86) International application number: PCT/SE1999/000128
(87) International publication number: WO 1999/040273

(56) References cited:
- WO-A-94/26999
- WO-A1-96/27721
- WO-A1-97/47834
- US-A- 752 694
- US-A- 5 165 816

## Description

The present invention relates to a flooring system comprising boards which are connected at a joint comprising groove and tenon, preferably intended to be joined with glue.

Prefabricated floorboards which at their edges are provided with groove and tenon are well known nowadays. As these are very easy to install it is possible for the normal handy man to achieve this. These type of floors can be constituted of massive wood, fibre board or particle board. These are often provided with a surface layer, such as lacquer or some sort of laminate. The boards are most often installed by gluing them together via their groove and tenon. It is desired to join the separate boards so closely that the joint becomes practically invisible, which increases the moisture resistance radically. The usable life of the installed floor is hereby also increased. In order to achieve a tight joint, it is essential that glue is used excessively. The clearance in the joint will therefore have to be relatively large in order to be able to force the boards together without having to use special equipment due to the forces that would be needed otherwise. A too small clearance will cause a hydraulic resistance caused by the glued captured inside the groove curing the joining. The clearance needed will however cause a random discrepancy in the levels between adjacent floorboards. The discrepancy in levels will lead to an increased wear at the joint and that moisture may penetrate the joint. The decorative wear layer, often constituted by lacquer or laminate will hereby often be worn down closest to the joint. The wood fibre will hereby be naked closest to the joint, which in addition to be being unsightly also may cause the fibres to swell when exposed to moisture. This causes the surface layer to rise closest to the edges whereby these edges will be exposed to further wear, which will decrease the useful life of the floor radically.

US-A-5 165 816 discloses a flooring system according to the preamble of claim 1.

US-A-752694 describes a wall the stones of which are provided with a tongue and a groove, respectively.

Finally, another system for joining building boards is known from WO 94/26999. A strip having a locking element is provided in addition to two floorboards to be joined.

The problem underlying the invention is to provide a flooring system the boards of which can be connected by groove and tenon, wherein the risk for error during installation is radically reduced, whereby the average usable life of the floor is considerably increased.

It has, through the present invention, quite unexpectedly been possible to solve the above mentioned problem.

The invention relates to a flooring system as claimed in claim 1.

The core of the boards may be constituted by a fibre board or a particle board. At least the upper side of the board may be constituted by a decorative thermosetting laminate. The fitting clearance between the tenon and the groove includes a first fitting clearance and a second, guiding, fitting clearance. The second, guiding, fitting clearance is obtained through the guiding wedges. The first fitting clearance comprises the main part of the fit and the second, guiding fitting clearance comprises a smaller part of the fit. The first fitting clearance is in the range 0.1 - 0.5 mm, while the second, guiding, fitting clearance is in the range 0.02 - 0.1 mm.

According to one embodiment of the invention the guiding wedges are arranged perpendicular to the extension of the joint.

According to another embodiment of the invention the guiding wedges are arranged parallel to the extension of the joint.

The surfaces of the joint is provided with recesses so that cavities are formed in the joint. The cavities are intended to receive the glue used during the joining.

The invention is further illustrated together with enclosed figures showing different embodiments of the invention whereby,
- figure 1 shows, in perspective view, a first embodiment of a guiding means at a joint.
- figure 2 shows, in perspective view, the embodiment form figure 1 after assembly.
- figure 3 shows, in perspective view, a second embodiment of a guiding means at a joint.
- figure 4 shows, in perspective view, a third embodiment of a guiding means at a joint.

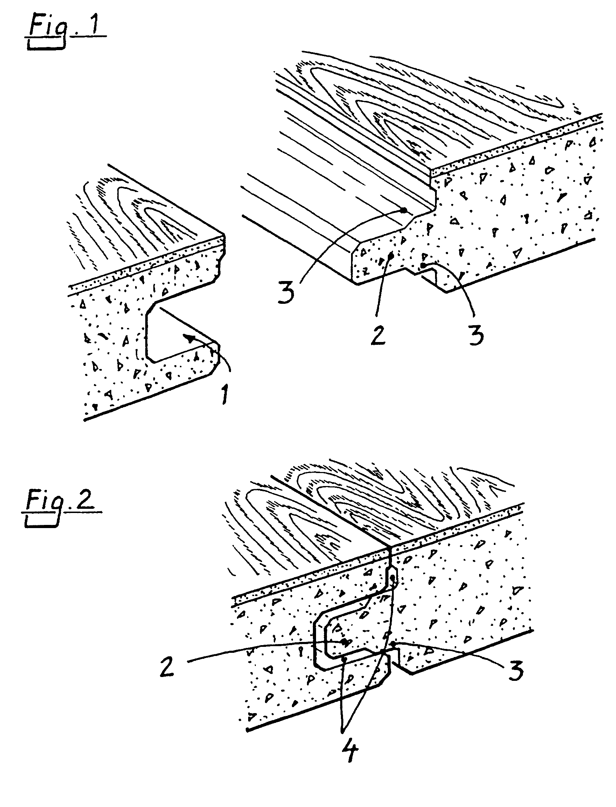

Accordingly, figure 1 shows, in perspective view seen from above, a first embodiment of a guiding means at a joint in a flooring system according to the invention. The guiding means comprises groove I and tenon 2 which usually is intended to be joined by using glue. The tenon 2 comprises guiding wedges 3 on the upper and lower sides. The fitting clearance between the groove 1 and tenon 2 includes a first and a second, guiding, fitting clearance, which second, guiding, fitting clearance is obtained by the guiding wedges 3. The first fitting clearance forms the main part of the fit while the second, guiding, fitting clearance forms a smaller part of the fit. The first fitting clearance is approximately 0.2 mm while the second, guiding fitting clearance is approximately 0.05 mm. The guiding wedges 3 are arranged parallel to the extension of the joint. The same embodiment is shown assembled in figure 2.

The respective surfaces of the joint are provided with recesses so that cavities 4 are formed in the joint. The cavities 4 are intended to receive the glue used at the assembly. The guiding means comprises a part of boards intended to, together form a floor whereby the core of the board is constituted by fibre board or a particle board and at least the upper side of the board is constituted by a decorative thermosetting laminate.

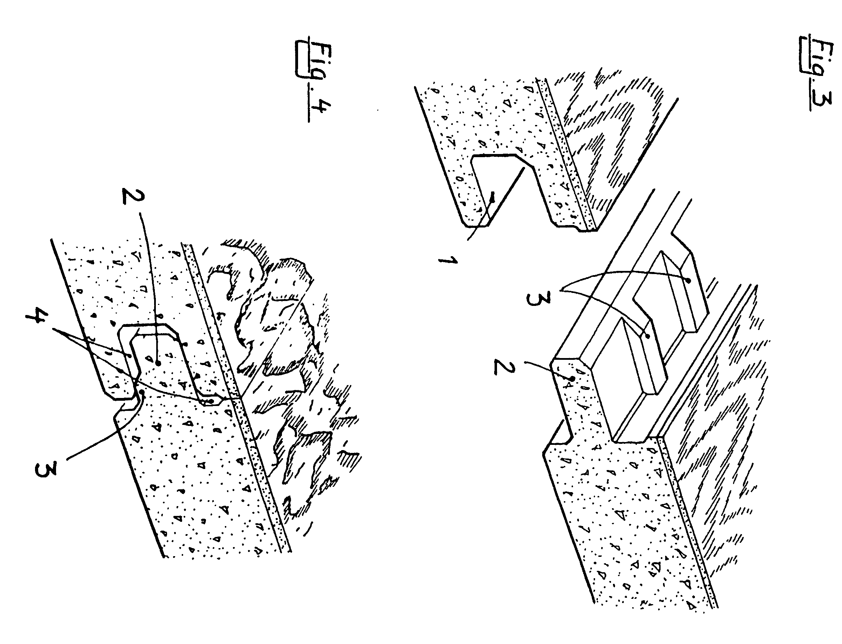

Figure 3 shows, in perspective view seen aslant from above, a second embodiment of a guiding means at a joint, in a flooring system according to the invention. The embodiment conforms in the main with the one described in connection to figure 1 and 2. The tenon 2 is, however, provided with guiding wedges arranged perpendicularly to the extension of the joint.

Figure 4 shows, in perspective view seen aslant from above, a third embodiment of a guiding means at a joint, in a flooring system according to the invention. The embodiment is shown assembled. The embodiment corresponds in the main to the one described in connection to figure 1 and 2, the tenon 2 is however provided with guiding wedges 3 only at the lower side.

The invention is not limited by the embodiments shown since these can varied in different ways within the scope of the invention as defined by the appended claims.

## Claims

1. A flooring system comprising floorboards to be joined at their edges, preferably with glue, wherein the edges of said floorboards are provided with coupling parts in the form of a groove (1) and a tenon (2), respectively,
wherein the tenon (2) includes at least one guiding wedge (3) to guide the floorboards during the joining, and
wherein the groove (1) and tenon (2) are so arranged and constructed that, when the tenon (2) is engaged with the groove (1),
- a first fitting clearance between the groove (1) and that part of the tenon (2) which does not carry the guiding wedge (3) extends along the main part of the overlap of the tenon (2) and the groove (1) in the joint, as seen perpendicularly to the jointed edges, and
- a second guiding fitting clearance, which is smaller than the first fitting clearance, is defined between the at least one guiding wedge (3) and the groove (1) and extends along a smaller part of said overlap, as seen perpendicularly to the jointed edges,
**characterized in that** the groove (1) and tenon (2) are so arranged and constructed that, when the tenon (2) is engaged with the groove (1), said second, smaller clearance is positioned nearer to the joined edges of the floorboards than the first, larger clearance, wherein the first clearance is in the range of 0,1 to 0,5 mm, while the second clearance is in the range of 0,02 to 0,1 mm.

2. A flooring system as claimed in claim 1, wherein said at least one guiding wedge (3) is arranged perpendicular to the extension of the joined edges of the floorboards.

3. A flooring system as claimed in claim 1, wherein said at least one guiding wedge (3) is arranged parallel to the extension of the joined edges of the floorboards.

4. A flooring system as claimed in any one of the preceding claims, wherein the surfaces of the groove (1) and/or the tenon (2) are provided with recesses so that, when the tenon (2) is engaged with the groove (1), cavities (4) are formed in the joint between the floorboards, which cavities (4) are intended to receive glue used during the joining.

5. A flooring system as claimed in any one of the preceding claims, wherein the floorboards have a core which is constituted by a fibre board or a particle board, wherein at least the upper side of the floorboards is constituted by a. decorative thermosetting laminate.

## Patentansprüche

1. Fußbodensystem mit Fußbodendielen, die an ihren Kanten zu verbinden sind, vorzugsweise mit Klebstoff, wobei die Kanten der Fußbodendielen mit Kopplungselementen in Form einer Nut (1) bzw. einer Feder (2) versehen sind,
wobei die Feder (2) zumindest einen Führungskeil (3) beinhaltet, um die Fußbodendielen während des Verbindens zu führen, und
wobei die Nut (1) und die Feder (2) so angeordnet und aufgebaut sind, dass, wenn die Feder (2) mit der Nut (1) im Eingriff ist,
- ein erster Passzwischenraum zwischen der Nut (1) und dem Teil der Feder (2), der nicht den Führungskeil (3) trägt, sich entlang des hauptsächlichen Teils der Überlappung zwischen der Feder (2) und der Nut (1) in der Verbindung erstreckt, gesehen rechtwinklig zu den verbundenen Kanten, und
- ein zweiter Führungspasszwischenraum, welcher kleiner ist als der erste Passzwischenraum, zwischen dem zumindest einen Führungskeil (3) und der Nut (1) definiert ist und sich entlang eines kleineren Teils der Überlappung erstreckt, gesehen rechtwinklig zu den verbundenen Kanten,
**dadurch gekennzeichnet, dass** die Nut (1) und die Feder (2) so angeordnet und aufgebaut sind, dass der zweite kleinere Zwischenraum, wenn die Feder (2) mit der Nut (1) im Eingriff ist, sich näher an den verbundenen Kanten der Fußbodendielen befindet als der erste größere Zwischenraum, wobei der erste Zwischenraum von 0,1 bis 0,5 mm beträgt, während der zweite Zwischenraum von 0,02 bis 0,1 mm beträgt.

2. Fußbodensystem nach Anspruch 1, bei welchem der zumindest eine Führungskeil (3) rechtwinklig zu der Erstreckung der verbundenen Kanten der Fußbodendielen angeordnet ist.

3. Fußbodensystem nach Anspruch 1, bei welchem der zumindest eine Führungskeil (3) parallel zur Erstreckung der verbundenen Kanten der Fußbodendielen angeordnet ist.

4. Fußbodensystem nach einem der vorangehenden Ansprüche, bei welchem die Oberflächen der Nut (1) und/oder der Feder (2) mit Ausnehmungen versehen sind, so dass, wenn die Feder (2) mit der Nut (1) im Eingriff ist, Hohlräume (4) in der Verbindung zwischen den Fußbodendielen ausgebildet sind, welche Hohlräume (4) Klebstoff aufnehmen sollen, der für die Verbindung verwendet wird.

5. Fußbodensystem nach einem der vorangehenden Ansprüche, bei welchem die Fußbodendielen einen Kern haben, der durch eine Faserplatte oder Spanplatte gebildet ist, wobei zumindest die obere Seite der Fußbodendielen durch ein dekoratives wärmehärtendes Laminat gebildet ist.

## Revendications

1. Système de plancher comprenant des lames de plancher devant être assemblées au niveau leurs bords, de préférence avec de la colle, dans lequel les bords desdites lames de plancher sont pourvus de pièces d'accouplements, respectivement sous forme d'une gorge (1) et d'un tenon (2),
dans lequel le tenon (2) comprend au moins un coin de guidage (3) pour guider les lames de plancher pendant l'assemblage, et
dans lequel la gorge (1) et le tenon (2) sont disposés et fabriqués de telle sorte que, lorsque le tenon (2) est en prise avec la gorge (1),
- un premier jeu d'ajustement entre la gorge (1) et la partie du tenon (2) qui ne porte pas le coin de guidage (3) s'étend le long de la partie principale de chevauchement du tenon (2) et de la gorge (1) dans le joint, tel que vu perpendiculairement aux bords assemblés, et
- un second jeu d'ajustement et de guidage, qui est plus petit que le premier jeu d'ajustement, est constitué entre le au moins un coin de guidage (3) et la gorge (1) et s'étend le long d'une partie plus petite dudit chevauchement, tel que vu perpendiculairement aux bords assemblés,
**caractérisé en ce que** la gorge (1) et le tenon (2) sont disposés et fabriqués de telle façon que, lorsque le tenon (2) est en prise avec la gorge (1), ledit second jeu plus petit est positionné plus près des bords assemblés des lames de plancher que le premier jeu plus grand, où le premier jeu est compris entre 0,1 et 0,5 mm tandis que le second jeu est compris entre 0,02 et 0,1 mm.

2. Système de plancher selon la revendication 1, dans lequel ledit au moins un coin de guidage (3) est disposé perpendiculairement au raccord des bords assemblés des lames de plancher.

3. Système de plancher selon la revendication 1, dans lequel ledit au moins un coin de guidage (3) est disposé parallèlement au raccord des bords assemblés des lames de plancher.

4. Système de plancher selon l'une quelconque des revendications précédentes, dans lequel la surface de la gorge (1) et/ou du tenon (2) est pourvue d'évidements de sorte que, lorsque le tenon (2) est en prise avec la gorge (1), des cavités (4) sont formées dans le joint entre les lames de plancher, lesquelles cavités (4) sont prévues pour recevoir de la colle employée pendant l'assemblage.

5. Système de plancher selon l'une quelconque des revendications précédentes, dans lequel les lames de plancher ont un coeur qui est constitué d'un panneau de fibres ou d'un panneau de particules, dans lequel au moins la face supérieure des lames de plancher est constituée d'un stratifié thermodurcissable décoratif.
